Europäisches Patentamt

European Patent Office

Office européen des brevets

(11) Veröffentlichungsnummer: **0 193 216**
**A2**

# (12) EUROPÄISCHE PATENTANMELDUNG

(21) Anmeldenummer: **86200065.0**

(22) Anmeldetag: **15.01.86**

(51) Int. Cl.⁴: **B 01 D 53/34**

(30) Priorität: **26.01.85 DE 3502695**

(43) Veröffentlichungstag der Anmeldung:
**03.09.86 Patentblatt 86/36**

(84) Benannte Vertragsstaaten:
**AT DE FR IT NL**

(71) Anmelder: **METALLGESELLSCHAFT AG**
**Reuterweg 14 Postfach 3724**
**D-6000 Frankfurt/M.1(DE)**

(72) Erfinder: **Keller-Reinspach, Hans Walter**
**Sophienstrasse 98**
**D-6000 Frankfurt am Main 90(DE)**

(74) Vertreter: **Rieger, Harald, Dr.**
**Reuterweg 14**
**D-6000 Frankfurt am Main(DE)**

(54) Reinigungsverfahren für schwefelhaltige Abgase.

(57) Bei der Entschwefelung von Abgasen durch Einsprühen von aufgeschlämmtem Kalziumhydroxid erreicht man einen guten Wirkungsgrad nur bei verhältnismäßig niedrigen Behandlungstemperaturen, die ihrerseits zu Korrosionsproblemen infolge Taupunktunterschreitung in den nachfolgenden Anlageteilen (z.B. Entstauber, Kamin) führen. Die Abgase müssen daher in vielen Fällen wieder aufgeheizt werden.

Es wird vorgeschlagen, die zur Aufheizung der Abgase erforderliche Energie aus der Oxidation des bei der Entschwefelung anfallenden Kalziumsulfits zu Kalziumsulfat zu gewinnen. Dazu werden die in der Gasreinigungsanlage anfallenden kalziumsulfithaltigen Rückstände in einem besonderen Ofen oxidiert, danach entstaubt und entweder den aufzuheizenden Abgasen direkt zugemischt oder zur indirekten Aufheizung mittels Wärmetauscher verwendet.

Fig.1

EP 0 193 216 A2

METALLGESELLSCHAFT AG
Reuterweg 14

25. Januar 1985
MLK/OKU (1832P)

6000 Frankfurt/Main 1

Prov.Nr. 9209 L

## Reinigungsverfahren für schwefelhaltige Abgase

Die Erfindung bezieht sich auf ein Reinigungsverfahren für schwefelhaltige Abgase, wobei die Entschwefelung durch Zugabe von aufgeschlämmten Kalziumhydroxid in einem Sprühabsorber erfolgt und die Abgase danach entstaubt und aufgeheizt werden.

Bei der Reinigung von schwefelhaltigen Abgasen im Sprühabsorber müssen die Abgase auf 60 bis 80°C abgekühlt werden, um einen möglichst hohen Entschwefelungsgrad zu erreichen. Mit diesen Temperaturen können die Abgase häufig nicht ohne weiteres in den Abgaskamin geleitet werden, weil sie stets auch mehr oder weniger stark mit Wasserdampf gesättigt sind und deshalb wegen Taupunktunterschreitung mit erheblichen Korrosionsschäden gerechnet werden muß.

Es sind daher schon verschiedene Vorschläge bekanntgeworden, die sich auf das Wiederaufheizen der entschwefelten und entstaubten Abgase beziehen.

Werden zum Wiederaufheizen im Bypass um die Reinigungseinrichtungen herumgeführte, nicht gekühlte Abgas-Teilströme benutzt, so muß man in Kauf nehmen, daß die Reinigung des Abgasstroms zwangsläufig schlechter ist als wenn der gesamte Abgasstrom durch die Reinigungseinrichtung geführt würde.

Wird das Aufheizen jedoch durch Zumischen von zu diesem Zweck erzeugten heißen Gasen bewirkt, so fallen zusätzliche Energiekosten an, die die Wirtschaftlichkeit des Reinigungsverfahrens u.U. erheblich belasten und schließlich auch die Wettbewerbsfähigkeit einer Produktion im Vergleich zu Produktionen ohne Abgasreinigung infrage stellen können. Dies gilt insbesondere dann, wenn das Gemisch aus Abgas und Heizgas bestimmte Schadstoffkonzentrationen nicht übersteigen darf und zur Erzeugung der Heizgase deshalb nur Brennstoffe verwendet werden können, bei deren Verbrennung keine oder nur zulässig kleine Schadstoffmengen erzeugt werden.

Es besteht somit die Aufgabe bei dem eingangs erwähnten Reinigungsverfahren für schwefelhaltige Abgase das notwendige Wiederaufheizen so zu gestalten, daß die geschilderten Nachteile nicht auftreten, d.h., daß eine möglichst weitgehende Reinigung des Abgasstroms erreicht wird, ohne daß dabei in nennenswertem Umfang zusätzliche Energie benötigt und ohne daß das gesamte Verfahren unwirtschaftlich wird.

Zur Lösung dieser Aufgabe ist erfindungsgemäß vorgesehen, daß das bei der Entschwefelung anfallende Kalziumsulfit zu Kalziumsulfat oxidiert und die dabei freiwerdende Wärme zur Aufheizung der Abgase ausgenutzt wird. Zweckmäßigerweise geht man dabei so vor, daß das Kalziumsulfit mittels Luft in einem Ofen oxidiert wird und die hierbei entstehenden Gase vom Kalziumsulfat gereinigt und danach direkt den aufzuheizenden Abgasen zugemischt werden. In anderen Fällen kann es vorteilhaft sein, daß die bei der Oxidation entstehenden Gase vom Kalziumsulfat gereinigt und zur Aufheizung der Abgase in einem Wärmetauscher genutzt werden.

Bei einer weiteren Ausgestaltung des Erfindungsgedankens ist vorgesehen, daß die Abgase mittels Feststoffabscheider entstaubt werden und daß das im Abscheider anfallende
$CaSO_3$ zusammen mit dem im Sprühabsorber anfallenden
$CaSO_3$ oxidiert und die dabei freiwerdende Wärme zur Aufheizung der Abgase ausgenutzt wird. Man kann auch so vorgehen, daß die bei der Oxidation des $CaSO_3$ anfallenden
Gase vorentstaubt, dann mit den Abgasen gemischt und
schließlich gemeinsam in einem Feststoffabscheider entstaubt werden.

In den Fällen, in denen eine Wiederaufheizung um eine verhältnismäßig hohe Temperaturdifferenz erforderlich ist
oder aber aus dem Reinigungsverfahren nur verhältnismäßig
kleine Kalziumsulfitmengen anfallen, können letztere auch
mit Sauerstoff angereicherter Luft oder im Extremfall auch
mit reinem Sauerstoff verbrannt werden. Schließlich ist es
bei dem erfindungsgemäßen Verfahren auch möglich, geringe
oder zeitweise auftretende Energiedefizite bei der Erzeugung der Heizgase durch Zufuhr von Primärenergie auszugleichen.

Abgesehen von den zuletzt erwähnten geringen oder zeitweise auftretenden Energiedefiziten, benötigt das erfindungsgemäße Verfahren zur Erzeugung der Heizgase keine
Primärenergie, sondern kommt mit im Verfahren selbst anfallenden Abfallstoffen aus, die sonst nicht weiter
brauchbar, aber auch nicht ohne weiteres deponierfähig
sind. Durch die erfindungsgemäße Oxidation des Kalziumsulfits zu Kalziumsulfat (Gips), wird einerseits ein weiterverarbeitbares und auch deponiefähiges Produkt geschaffen
und andererseits der Energiebedarf für das notwendige Wiederaufheizen der Abgase gedeckt. Das Verfahren ist somit
unter zwei völlig getrennten Gesichtspunkten als äußerst
vorteilhaft anzusehen.

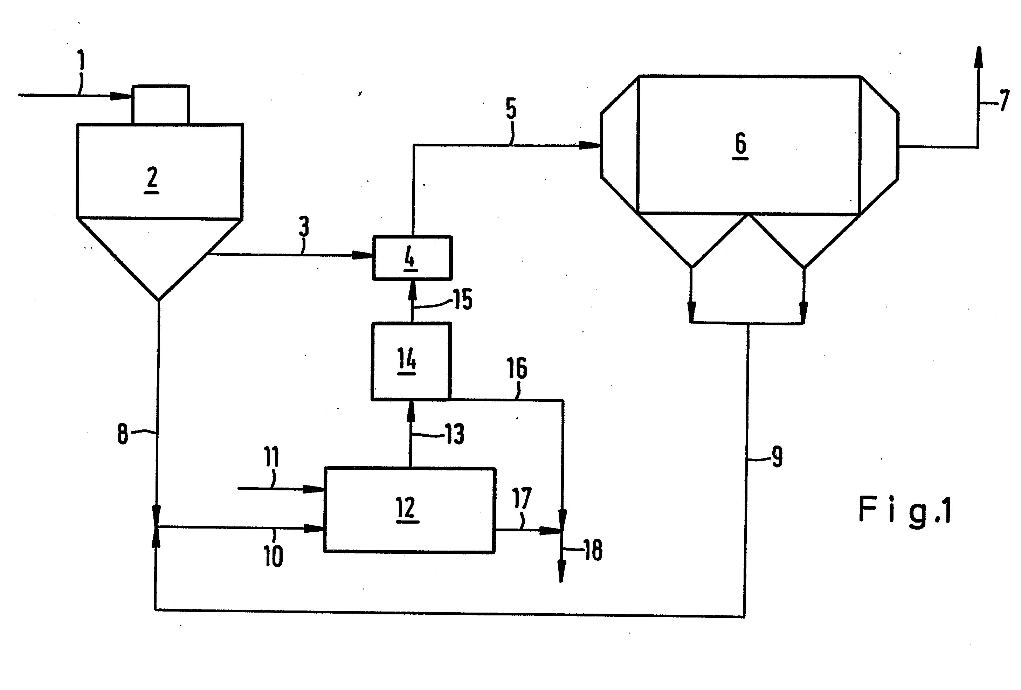

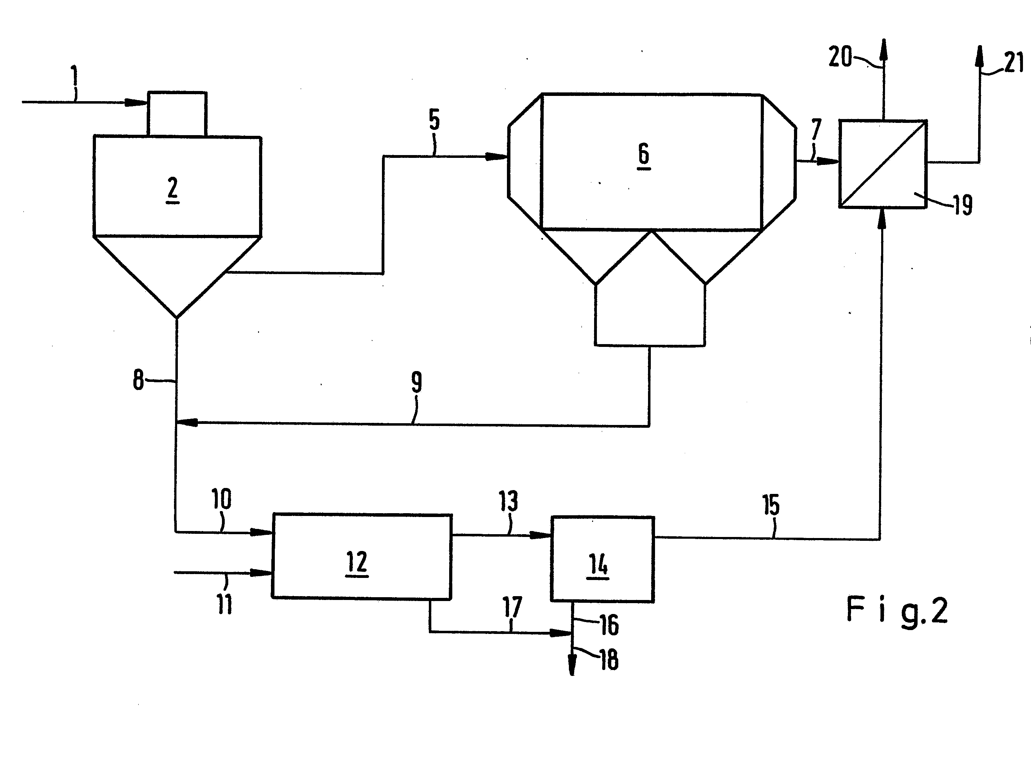

Weitere Einzelheiten und Vorteile des erfindungsgemäßen
Verfahrens werden anhand der in den Figuren 1 und 2 dar-

0193216

gestellten Schaltungsbeispielen sowie einer Wärmebilanz
näher erläutert.

Bei der Ausführungsform gemäß Figur 1 wird das zu reinigende Abgas über die Leitung 1 einem Sprühabsorber 2 zugeführt und durch Zugabe von aufgeschlämmtem Kalziumhydroxid
entschwefelt. Das entschwefelte Abgas verläßt den Sprühabsorber über die Leitung 3 und gelangt über einen Gasmischer 4 und die Leitung 5 in den Staubabscheider 6 und von
dort über die Leitung 7 in den Abgaskamin. Die im Sprühabsorber 2 anfallenden Rückstände, die bis zu etwa 80 % Kalziumsulfit und etwa 20 % Kalziumsulfat enthalten, werden
über die Leitungen 8 und 10 einem Ofen 12 zugeführt. Das
gleiche geschieht mit den im Staubabscheider 6 anfallenden
Stäuben, die u.a. ebenfalls hohe Anteile an Kalziumsulfit
enthalten und über die Leitungen 9 und 10 dem Ofen 12 zugeführt werden. Die zur Oxidation des Kalziumsulfits erforderliche Verbrennungsluft – ggfs. mit Sauerstoff angereichert oder auch Zusatzbrennstoff – wird über die Leitung 11 in den Ofen 12 eingebracht. Die bei der Oxidation
entstehenden heißen Gase werden über die Leitung 13 einer
Entstaubungseinrichtung 14 und über die Leitung 15 dem
Gasmischer 4 zugeführt und hier mit den aufzuheizenden Abgasen gemischt. Die im wesentlichen aus Kalziumsulfat
bestehenden Rückstände des Ofens 12 und der Entstaubungseinrichtung 14 werden über die Leitungen 16 bis 18 aus der
Anlage ausgeschleust.

Bei der Alternative gemäß Figur 2 wird das zu reinigende
Abgas wieder über die Leitung 1 dem Sprühabsorber 2 zugeführt und erreicht über die Leitung 5 den Staubabscheider 6. Das entschwefelte und entstaubte Abgas gelangt sodann über die Leitung 7 in einen Wärmetauscher 19 und wird
über die Leitung 20 einem Abgaskamin zugeführt. Der bis zu
80 % aus Kalziumsulfit enthaltende Rückstand aus dem
Sprühabsorber 2 und der im elektrostatischen Staubabscheider anfallende, kalziumsulfithaltige Staub werden über die Leitungen 8,9 und 10 dem Ofen 12 zugeführt. In Ofen 12 wird das Kalziumsulfit mit der über die Leitung 11 eingebrachten Verbrennungsluft zu Kalziumsulfat oxidiert. Die dabei entstehenden heißen Verbrennungsgase verlassen den Ofen 12 über die Leitung 13 und gelangen über die Entstaubungseinrichtung 14 und die Leitung 15 in den Wärmetauscher 19 und schließlich über die Leitung 21 in den Abgaskamin. Die Rückstände des Ofens 12 und der Entstaubungseinrichtung 14 werden wiederum über die Leitungen 16 bis 18 aus der Anlage ausgeschleust.

Welche der beiden in den Figuren 1 und 2 dargestellten Schaltungsvarianten im Einzelfall die günstigere ist, muß von Fall zu Fall entschieden werden. Selbstverständlich gibt es auch weitere Ausführungsformen des Erfindungsgedankens, der im Kern darin besteht, das bei der Entschwefelung anfallende Kalziumsulfit, das ohne Nachbehandlung weder nutzbar noch lagerfähig ist, für die erforderliche Aufheizung der bei der Entschwefelung abgekühlten Abgase zu verwenden. Auf diese Weise werden gleich zwei Probleme gelöst, die bei der Entschwefelung von Abasen unter Verwendung von aufgeschlämmtem Kalziumhydroxid bisher noch erhebliche Schwierigkeiten bereitet haben. In der beigefügten Tabelle 1 sind die wesentlichen Daten einer Massen- und Energiebilanz für eine Abgasmenge von 1 $Nm^3$ mit einem $SO_2$-Gehalt von 4 bzw. 6 $g/Nm^3$ aufgeführt. Der $SO_2$-Gehalt im Reingas wurde mit 400 $mg/Nm^3$ angenommen. Bei der Oxidation von $CaSO_3$ zu $CaSO_4$ werden pro Mol 61,8 kcal frei. Die spezifische Wärme $C_p$ des entstehenden Heizgases beträgt 0,31 $kcal/Nm^3°C$.

Wie sich aus der letzten Spalte der Tabelle 1 ergibt, sind bei Anwendung des Erfindungsgedankens Temperaturerhöhungen des Abgases um 9 bzw. 14°C zu erreichen, wenn im Rohgas 4 bzw. 6 g $SO_2/Nm^3$ enthalten sind. Das erscheint auf den ersten Blick nicht besonders viel zu sein, reicht in vielen Fällen aber aus, die gereinigten Abgase in der Temperatur so weit über den Taupunkt anzuheben, daß dieser bis Kaminaustritt mit Sicherheit nicht unterschritten wird. Wichtig ist, daß höhere Schwefelgehalte im Rohgas, die im Sprühabsorber eine intensivere Behandlung mit entsprechend starker Temperaturabsenkung erfordern, auf der anderen Seite aber auch die Voraussetzungen für eine entsprechend größere Temperaturerhöhung bei Anwendung des Erfindungsgedankens mit sich bringen. Insoweit besteht also ein gewisser Selbstregeleffekt, der - bei einmal installierter Anlage gemäß Figur 1 oder 2 - dafür sorgt, daß die Abgasentschwefelung ohne wirtschaftlichen Mehraufwand unabhängig vom jeweiligen Schwefelgehalt der Rohgase durchgeführt werden kann.

# Tabelle 1

__Engerie- und Massenbilanz für 1 $Nm^3$__

| 1 | 2 | 3 | | | | |
|---|---|---|---|---|---|---|
| $SO_2$-Rohgas g/$Nm^3$ | $SO_2$-Abge- schieden g | Rückstand 1) $CaSO_3$ $CaSO_4$ g | | $CaSO_3$ 2) mol. | freiwerdende Wärme- 3) menge Q (kcal) | Temperaturer- höhung $\Delta T$ ($^oC$) |
| 4 | 3,6 | 5,4 | 1,53 | 0,045 | 2,781 | 9 |
| 6 | 5,6 | 8,4 | 2,38 | 0,07 | 4,326 | 14 |

1) 80 % des Rückstandes besteht aus $CaSO_3$, 20 % aus $CaSO_4$

$CaSO_3 = \frac{120}{64}$ x 0,8 x /Spalte 2 ; $CaSO_4 = \frac{130}{64}$ x 0,2 x /Spalte 2

2) $CaSO_3$ (mol) = ($CaSO_3$ Spalte 3)/120

3) Q = $CaSO_3$ (mol) x 61,8 kcal/mol.

4) $\Delta T$ = Q/cp

## PATENTANSPRÜCHE

1. Reinigungsverfahren für schwefelhaltige Abgase, wobei
   die Entschwefelung durch Zugabe von aufgeschlemmtem
   Kalziumhydroxid in einem Sprühabsorber erfolgt und die
   Abgase danach entstaubt und aufgeheizt werden, dadurch
   gekennzeichnet, daß das bei der Entschwefelung anfallende Kalziumsulfit zu Kalziumsulfat oxidiert und die
   dabei freiwerdende Wärme zur Aufheizung der Abgase ausgenutzt wird.

2. Verfahren nach Anspruch 1, dadurch gekennzeichnet, daß
   das Kalziumsulfit mittels Luft in einem Ofen oxidiert
   wird und die hierbei entstehenden Gase vom Kalziumsulfat gereinigt und danach direkt den aufzuheizenden Abgasen zugemischt werden.

3. Verfahren nach Anspruch 1, dadurch gekennzeichnet, daß
   die bei der Oxidation entstehenden Gase vom Kalziumsulfat gereinigt und zur Aufheizung der Abgase in einem
   Wärmetauscher genutzt werden.

4. Verfahren nach einem der Ansprüche 1 bis 3, dadurch
   gekennzeichnet, daß die Abgase mittels Feststoffabscheider entstaubt werden und daß das im Abscheider anfallende $CaSO_3$ zusammen mit dem im Sprühabsorber anfallenden $CaSO_3$ oxidiert und die dabei freiwerdende
   Wärme zur Aufheizung der Abgase ausgenutzt wird.

5. Verfahren nach Anspruch 2, dadurch gekennzeichnet, daß
   die bei der Oxidation des $CaSO_3$ anfallenden Gase vorentstaubt, dann mit den Abgasen gemischt und schließlich gemeinsam in einem Feststoffabscheider entstaubt
   werden.

6. Verfahren nach einem der Ansprüche 1 bis 5, dadurch gekennzeichnet, daß das Kalziumsulfit mit Sauerstoff angereicherter Luft oder mit reinem Sauerstoff oxidiert wird.

7. Verfahren nach einem der Ansprüche 1 bis 6, dadurch gekennzeichnet, daß geringe oder zeitweise auftretende Energiedefizite bei der Erzeugung der Heizgase durch die Zufuhr von Primärenergie ausgeglichen werden.

Fig.1

Fig.2

0193216